# EUROPÄISCHE PATENTSCHRIFT

(11) **EP 1 403 122 B1**
(45) Veröffentlichungstag und Bekanntmachung des Hinweises auf die Patenterteilung: **12.11.2008**
(21) Anmeldenummer: 03018209.1
(22) Anmeldetag: 09.08.2003
(51) Int. Cl.: B60K 23/08

(54) **Verfahren zur Regelung des Fahrverhaltens zur Vermeidung des Untersteuerns**
Method to adjust driving properties in order to avoid understeering
Méthode de régulation du comportement routier permettant d'éviter de sous-virer

(30) Priorität: 26.09.2002 DE 10245035
(43) Veröffentlichungstag der Anmeldung: 31.03.2004
(73) Patentinhaber: Dr. Ing. h.c. F. Porsche Aktiengesellschaft, 70435 Stuttgart (DE)
(72) Erfinder: Bastian, Klaus, 75242 Neuhausen (DE); Frank, Jan, 75203 Königsbach-Stein (DE); Hofbauer, Markus, 73098 Rechberghausen (DE)

(56) Entgegenhaltungen:
- EP-A- 0 460 547
- EP-A- 1 162 101
- EP-A- 1 203 687

## Beschreibung

Die vorliegende Erfindung betrifft Fahrzeuge mit einem Allradantrieb mit fester Drehmomentenverteilung und regelbarer Längssperre sowohl mit als auch ohne regelbare Hauptachsen - Quersperre.

Das Dokument EP 1162 101A Zeigt ein Gattungegermässes Fahrzeug nach dem Oberbegriff des Anspruchs 1.

Bei Fahrzeugen mit einem Sperrmoment an Längs- und/oder Quersperre kann es in bestimmten Fahrsituationen aufgrund der Drehmomentenverteilung zwischen Vorder- und Hinterachse und der Reibwertverhältnisse an den Rädern zu einem Untersteuern des Fahrzeuges kommen. Dies führt dazu, dass das Fahrzeug nicht mehr dem Fahrtrichtungswunsch des Fahrers folgt und über die Vorderräder schiebt.

Die vorliegende Erfindung nutzt die Erkenntnis, über den Zusammenhang von Fahrzeuggeschwindigkeit, Querbeschleunigung und Lenkwinkel für eine optimale Steuerung der Querbeschleunigung aus. Das erfindungsgemäße Verfahren hat den Vorteil, dass im Falle eines Untersteuerns durch eine Veränderung der Momentenverteilung zwischen den Achsen und/oder dem Reduzieren des Sperrmomentes der Quersperre das Fahrverhalten des Fahrzeuges beeinflusst werden kann. Besonders vorteilhaft ist, dass über die Querbeschleunigung und die Fahrgeschwindigkeit in einem dreidimensionalen Kennfeld ein Hüllkurve für die zugehörigen Lenkwinkel gespeichert werden kann. Damit kann für jede Fahrsituation der entsprechende Lenkwinkel bestimmt werden, bei dem das Fahrzeug ein neutrales Fahrverhalten aufweist. Somit ergibt sich bei der vorliegenden Erfindung der Vorteil, dass bei einem Abweichen des Lenkwinkels von der Hüllkurve ein instabiler Fahrzustand erkannt wird, wobei ein Untersteuern des Fahrzeuges erkannt wird, wenn der tatsächliche Lenkwinkel größer als der von der Hüllkurve vorgegeben ist. Liegt der Lenkwinkel innerhalb der Hüllkurve, liegt eine normale Fahrsituation vor und das Fahrzeug folgt dem Fahrtrichtungswunsch des Fahrers. Bei der Bestimmung der Fahrsituation sind eine Vielzahl weiterer Parameter, wie der Gierwinkel, die Giergeschwindigkeit, die Gierbeschleunigung, die Fahrgeschwindigkeit oder auch Ersatzmodelle für die Raddrehzahlen einbeziehbar. Letztendlich können Größen, die das Fahrverhalten eines Fahrzeuges beeinflussen, in der Applikation ermittelt bewertet und als Information im Steuergerät des Fahrzeuges abgelegt werden.

Eine Ausführungsform der erfindungsgemäßen Steuerung ist in der Fig. dargestellt und im nachfolgenden näher erläutert.

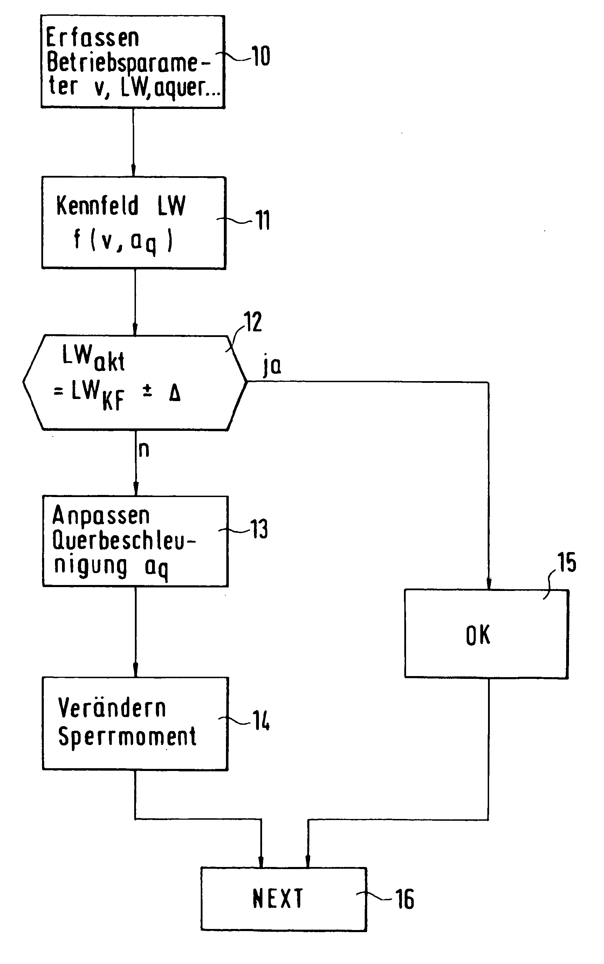

Die Figur zeigt einen Ablaufplan zur Durchführung des Verfahrens zum Erkennen eines Übersteuerns des Fahrzeuges und die Schritte zum Regulieren dieses instabilen Fahrverhaltens.

Das erfindungsgemäße Verfahren zur Regelung der Längs- und/oder Quersperre eines Fahrzeuges ist als Prinzipschema dargestellt, wobei Details, die für den Grundgedanken der Erfindung nicht wesentlich sind, hier nicht näher erläutert werden sollen.
Bei dem vorliegenden Verfahren werden zunächst in einem ersten Arbeitsschritt 10 die verschiedenen Betriebsparameter wie Fahrgeschwindigkeit v, Querbeschleunigung a_{q} und Lenkwinkel LW als Eingangsgrößen erfasst. Üblicherweise liegen diese Werte bereits im Fahrzeug vor und werden beispielsweise über eine CAN - Bus an die einzelnen Steuergeräte übertragen. Es müssen zur Auswertung und Durchführung keine weiteren Sensoren oder Auswerteeinheiten vorgesehen werden, sondern nur die benötigten Werte ausgelesen und für die weitere Verarbeitung zur Verfügung gestellt werden. Anschließend wird in einem Arbeitsschritt 11 abgelegten Kennfeld, das sich über die Fahrgeschwindigkeit v und Querbeschleunigung a_{q} erstreckt, der zugehörige Kennfeldlenkwinkel LW(KF) für diese Fahrgeschwindigkeit v und die Querbeschleunigung aq ausgelesen. Das Kennfeld wurde beispielsweise bereits in der Applikation ermittelten und im Steuergerät gespeichert. Im Abfrage 12 werden nun der aktuelle LW(akt) und der dem Kennfeldwert entnommene für den Kennfeldlenkwinkel LW(KF) miteinander verglichen. Die beiden Werte dürfen um eine vorgebbare Abweichung Δ voneinander abweichen, ohne dass ein Handlungsbedarf für einen Eingriff zur Veränderung der Querbeschleunigung erkannt wird. Das bedeutet, wenn der aktuelle Lenkwinkel LW(akt) in diesem zulässigen Bereich, LW(akt)= LW(KF) + Δ, dann führt der Ja Ausgang dieser Abfrage 12 an einen Programmschritt 15, in welchem ein ordnungsgemäßes Fahrverhalten erkannt wird und keine zusätzlichen Eingriffe in die Fahrsituation vorgenommen werden. Wurde jedoch eine entsprechend große Abweichung der Lenkwinkel erkannt, so führt der Nein Ausgang der Abfrage 12 an einen Arbeitsschritt 13, in welchem nun ein Übersteuern und damit eine notwendige Veränderung der Querbeschleunigung erkannt wird. Dieses Verändern der Querbeschleunigung wird im nachfolgenden Arbeitsschritt 14 über ein entsprechendes Ansteuern der Längs- und/oder Quersperre realisiert. Die Änderung der Querbeschleunigung wird durch Erhöhung des Seitenführungspotentials realisiert, wobei diese Erhöhung mittels einer Veränderung des Verteilerverhältnisses und somit durch die entsprechende Ansteuerung der Sperren erfolgt. Dadurch wird auch eine Korrektur des Lenkwinkels erforderlich, so daß der Fahrer in den Regelkreis mit eingebunden wird. Durch die Korrektur von Querbeschleunigung und/oder Lenkwinkel stabilisiert sich das Fahrzeug auf der vorgegebenen neutralen Bahnkurve. Die Stufen zum Abbau des Übersteuerns durch Veränderung der Längs- und/oder Quersperre können hierbei variable bestimmt werden. Die Geschwindigkeit des Regelvorganges kann beispielsweise abhängig sein von weiteren Erfordernissen an das Fahrzeug, wobei hier beispielsweise auch der aktuelle Zustand der Fahrbahn berücksichtigt werden kann. Nach erfolgter Anpassung des Fahrverhalten des Fahrzeuges wird dies im Schritt 16 erkannt und es können nun neue Werte für die erfindungsgemäße Steuerung erfasst werden.

Die Werte für die Hüllkurve wurden, wie bereits oben ausgeführt, bereits im Vorfeld theoretisch ermittelt und im Fahrversuch immer auf den jeweiligen Fahrzeugtyp abgestimmt. Eine mögliche neutrale Bahnkurve für den Lenkwinkel ergibt sich aus der Funktion LW = f (a_{q}, v_{Fzg}).

Grundsätzlich kann diese erläuterte Strategie zur Untersteuerkorrektur auch zur Übersteuerkorrektur eingesetzt werden. Es ist weiterhin festzuhalten, dass durch in allgemeinen im Fahrbetrieb nicht konstanten Lenkwinkel der Fahrer ebenfalls einen Teil des Regelkreises darstellt. Eine Reduzierung des Vorderachsanteils und/oder die Reduzierung des Sperrmomentes einer Quersperre endet auch die Seitenführungskapazität der Vorderachse, so dass das Ausmaß des Untersteuern reduziert und idealerweise beseitigt wird.

Diese Regelstrategie kann angewendet werden bei Vierradantrieb mit Längskupplung, bei Vierradantrieb mit fester Verteilung der regelbaren Längssperre und regelbaren Hinterachsquersperre und bei Zweiradantrieb mit regelbarer Quersperre.

## Patentansprüche

1. Verfahren zur Regelung des Fahrverhaltens von Fahrzeugen mit einer regelbaren Längskupplung und/oder einer regelbaren Hauptachsen - Quersperre bei Allradsystemen und einer regelbaren Quersperre bei Fahrzeugen mit Einachsenbetrieb, wobei zumindest die Fahrgeschwindigkeit (v), die Querbeschleunigung (a_{q}) und der aktuelle Lenkwinkel (LW(akt)) erfasst werden, **dadurch gekennzeichnet, dass** einem abgelegten Kennfeld, welches sich über die Fahrgeschwindigkeit (v) und die Querbeschleunigung (a_{q}) erstreckt, ein, ein zu der Fahrgeschwindigkeit (v) und die Querbeschleunigung (a_{q}) zugehöriger Kennfeldlenkwinkel (LW(KF)) entnehmbar ist, wobei bei einem Überschreiten einer vorgebbaren Abweichung (Δ) des aktuellen Lenkwinkels (LW(akt)) vom Kennfeldlenkwinkel (LW(KF)) die Querbeschleunigung (a_{q}) verändert wird.

2. Verfahren nach Anspruch 1, **dadurch gekennzeichnet, dass** eine verändernde Querbeschleunigung über eine Veränderung der Längs- und/oder Quersperre erfolgt.

3. Verfahren nach Anspruch 2, **dadurch gekennzeichnet, dass** die Veränderung der Ansteuerung der Längs- und/oder Quersperre in variablen Schritten erfolgt.

4. Verfahren nach einem der vorherigen Ansprüche, **dadurch gekennzeichnet, dass** sich über eine Reduzierung des Sperrmomentes die Seitenführungskapazität ändert und so das Ausmaß des Untersteuerns reduziert wird.

## Claims

1. Method for adjusting driving properties of vehicles having an adjustable longitudinal clutch and/or an adjustable main axle transverse lock in all-wheel drive systems and an adjustable transverse lock in vehicles with single-axle operating mode, wherein at least the velocity (v), the lateral acceleration (aq) and the current steering angle (LW(akt)) are acquired, **characterized in that** from a stored characteristic diagram, which extends over the velocity (v) and the lateral acceleration (aq) it is possible to obtain a characteristic diagram steering angle (LW(KF)) which is associated with the velocity (v) and the lateral acceleration (aq), wherein when a predefinable deviation (Δ) of the current steering angle (LW(akt)) from the characteristic diagram steering angle (LW(KF)) is exceeded, the lateral acceleration (aq) is changed.

2. Method according to Claim 1, **characterized in that** a changing lateral acceleration is brought out by changing the longitudinal lock and/or transverse lock.

3. Method according to Claim 2, **characterized in that** the actuation of the longitudinal lock and/or transverse lock is changed in variable increments.

4. Method according to one of the preceding claims, **characterized in that** as a result of the locking torque being reduced the lateral guiding capacity changes and the degree of understeer is therefore reduced.

## Revendications

1. Procédé de régulation du comportement de conduite de véhicules comprenant un accouplement longitudinal réglable et/ou un blocage transversal d'essieu principal réglable pour des systèmes à toutes roues motrices et comprenant un blocage transversal réglable pour des véhicules ayant un fonctionnement à un essieu, au moins la vitesse de conduite (v), l'accélération transversale (aq) et l'angle de braquage actuel (LW(akt)) étant détectés, **caractérisé en ce qu'**à partir d'un champ caractéristique enregistré, qui s'étend sur la vitesse de conduite (v) et l'accélération transversale (aq), on peut prélever un angle de braquage de champ caractéristique (LW(KF)) associé à la vitesse de conduite (v) et à l'accélération transversale (aq), et en cas de dépassement d'un écart prédéfinissable (Δ) de l'angle de braquage actuel (LW(akt)) par rapport à l'angle de braquage de champ caractéristique (LW(KF)), l'accélération transversale (aq) est modifiée.

2. Procédé selon la revendication 1, **caractérisé en ce qu'**une accélération transversale modifiée s'effectue par le biais d'une variation du blocage longitudinal et/ou transversal.

3. Procédé selon la revendication 2, **caractérisé en ce que** la variation de la commande du blocage longitudinal et/ou transversal s'effectue par étapes variables.

4. Procédé selon l'une quelconque des revendications précédentes, **caractérisé en ce que** la capacité de guidage latéral varie par le biais d'une réduction du couple de blocage, et de ce fait l'ampleur du sous-virage est réduite.
